Europäisches Patentamt

European Patent Office

Office européen des brevets

(19)

(11) EP 0 793 371 A1

(12) **EUROPEAN PATENT APPLICATION**

(43) Date of publication:
03.09.1997 Bulletin 1997/36

(51) Int Cl.6: **H04L 27/233**, H04L 27/227, H03M 13/12

(21) Application number: 97300862.6

(22) Date of filing: 11.02.1997

(84) Designated Contracting States:
DE FR GB NL

(30) Priority: 22.02.1996 JP 34537/96

(71) Applicant: SONY CORPORATION
Tokyo (JP)

(72) Inventors:
• Ikeda, Tamotsu
Shinagawa-ku, Tokyo (JP)

• Ikeda, Yasunari
Shinagawa-ku, Tokyo (JP)
• Okada, Takahiro
Shinagawa-ku, Tokyo (JP)

(74) Representative: Nicholls, Michael John et al
J.A. KEMP & CO.
14, South Square
Gray's Inn
London WC1R 5LX (GB)

(54) **Differential orthogonal demodulation providing soft input for Viterbi decoding**

(57) An apparatus for receiving an input signal formed through differential modulation and orthogonal modulation of a sequence of information to be transmitted and further through frequency conversion thereof into a transmission frequency. The apparatus comprises a frequency converter (13) for converting the frequency of the received signal into a lower frequency, an orthogonal demodulator (15) for executing orthogonal demodulation of the signal outputted from the frequency converter (13), and a differential demodulator (50) for executing differential demodulation of the signal outputted from the orthogonal demodulator (15), wherein the differential demodulator (50) outputs a signal weighted in accordance with the transmission line characteristic. Due to such signal weighting, it becomes possible to minimize the influence of the data, which have been affected harmfully by phasing or noise to a lower signal level, on the calculation of the likelihood in Viterbi decoding performed in the succeeding stage, hence enhancing the error correction capability. Further, a divider and so forth required usually in the differential demodulator (50) can be omitted to consequently achieve an advantage of reducing the circuit scale.

# FIG. IA

I INFORMATION

INFORMATION SOURCE → CONVOLUTIONAL CODER (1) → SERIES-PARALLEL CONVERTER (2) → DIFFERENTIAL MODULATOR (3) → ORTHOGONAL MODULATOR (4) → FREQUENCY CONVERTER (5) → BAND LIMIT FILTER (6) → (7)

Q INFORMATION

EP 0 793 371 A1

# F I G. IB

I INFORMATION

11

| BAND LIMIT FILTER 12 | FREQUENCY CONVERTER 13 | LOW PASS FILTER 14 | ORTHOGONAL DEMODULATOR 15 | DIFFERENTIAL DEMODULATOR 50 | PARALLEL-SERIES CONVERTER 17 | VITERBI DECODER 18 | DECODED DATA |

Q INFORMATION

## EP 0 793 371 A1

### Description

The present invention relates to a receiving apparatus and a receiving method, and more particularly to those adapted to perform error correction and digital modulation and demodulation.

In a communication channel placed under severe power-limited condition, it is generally customary to attain a reduction of required power with a coded gain obtained by the use of error correction code. In such a system, there is known in general a technique of executing error correction coding on its transmission side and error correction decoding on its reception side. In any communication channel under particularly severe power-limited condition, the use of convolutional code is advantageous, and soft decision decoding can be performed with ease by means of Viterbi decoding to attain a high gain.

Further in PSK (Phase Shift Keying) or similar method of modulation, differential modulation is executed in a stage posterior to an error correction coder to thereby retain sufficient resistance against disturbance of phase noise or the like.

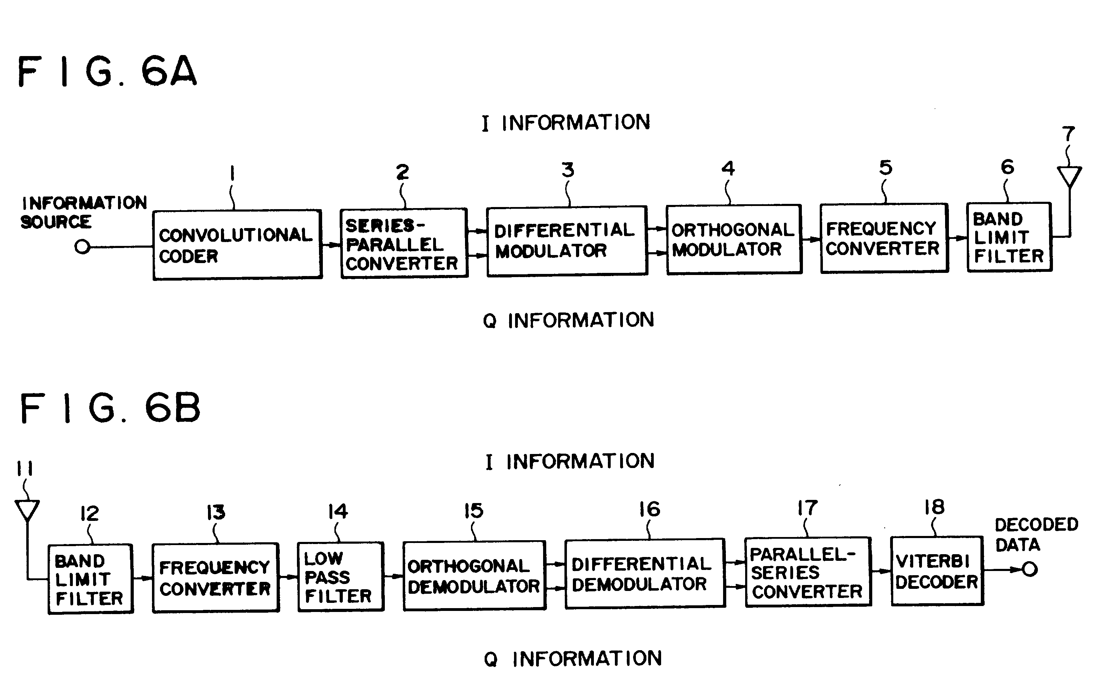

In the accompanying drawings, Figs. 6A and 6B are block diagrams of an exemplary information transmitting system where radio transmission is performed by QPSK (Quadrature PSK) with a combination of convolutional coding and differential modulation, in which Fig. 6A shows a configuration of a transmitting apparatus in the system, and Fig. 6B shows that of a receiving apparatus therein.

In the transmitting apparatus of Fig. 6A, a convolutional coder 1 executes convolutional coding of input digital data from an information source and then delivers output data protected against error. A series-parallel converter 2 converts digital data of one path into digital data of two paths and outputs the result of such conversion.

A differential modulator 3 executes differential coding of predetermined internal information and the input data, and then outputs the coded data. An orthogonal modulator 4 multiplies the input data by sine (SIN) waves and cosine (COS) waves respectively and adds the results thereof to produce an orthogonal modulated output. Subsequently a frequency converter 5 converts the frequency of the input signal into an actual transmission frequency. A band limit filter 6 removes some signal components included in the input signal and corresponding to unrequired frequencies. And the signal after such removal of the components of unrequired frequencies is transmitted by radio waves from an antenna 7.

In the receiving apparatus of Fig. 6B, a band limit filter 12 removes some signal components, which correspond to unrequired frequencies, from the radio-wave signal received via an antenna 11. A frequency converter 13 converts the input signal frequency into a predetermined frequency which is lower than that of the received signal. A low-pass filter 14 permits passage therethrough of only the partial input signal of any frequency lower than the predetermined frequency and then outputs an IF (Intermediate Frequency) signal.

An orthogonal demodulator 15 multiplies the input signal by the COS waves and the SIN waves to produce I (In-phase) information and Q (Quadrature-phase) information. A differential demodulator 16 processes the input data in a manner inverse to the process executed in the differential modulator 3, thereby outputting differential demodulated data. A parallel-series converter 17 processes the digital data of two paths inversely to the process executed in the series-parallel converter 2, thereby converting the input data into digital data of one path. A Viterbi decoder 18 executes error correction of the input signal in accordance with a Viterbi algorithm and then outputs decoded data obtained as a result of such process.

Now the operation performed in the above system will be described below. The digital data inputted to the convolutional coder 1 from a predetermined information source are processed through error correction coding to become error-protected data, which are then supplied to the series-parallel converter 2. The data thus obtained are those of one path. The digital data of one path supplied to the series-parallel converter 2 are converted into digital data of two paths. The result of such conversion is supplied to the differential modulator 3, which then executes differential coding of the internal information and the input information (digital data of two paths supplied from the series-parallel converter 2).

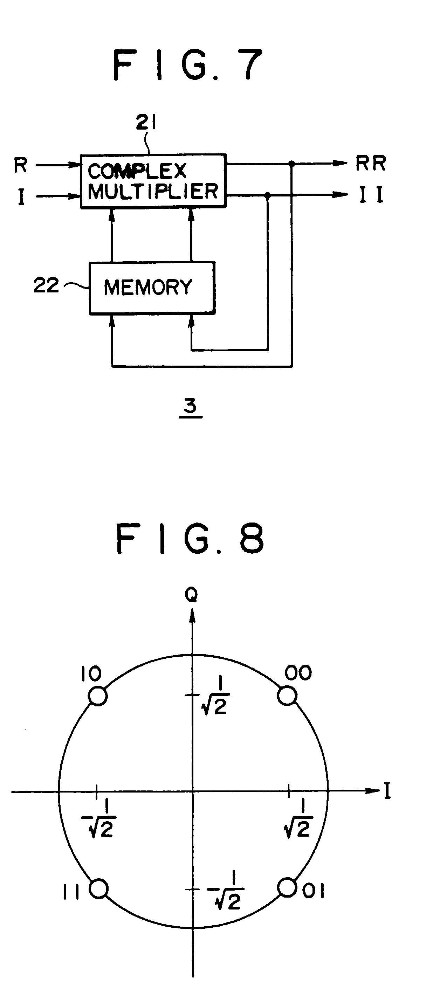

Fig. 7 shows an exemplary structure of the differential modulator 3. A complex multiplier 21 multiplies the real part (real number part) and the imaginary part (imaginary number part) of the input data respectively by the real part and the imaginary part of data supplied from an undermentioned memory 22 and then outputs the results of the multiplications. The memory 22 stores the results of such multiplications, which are thereafter supplied to the complex multiplier 21 at a predetermined timing. More specifically, the complex multiplier 21 and the memory 22 perform differential modulation of the input data.

In such differential modulation, it is assumed here that the data stored in the memory 22 is set to a predetermined initial value which is composed of a real part and an imaginary part. For example, the initial value is supposed to denote a complex representation which corresponds to a signal point 00 in an arrangement of Fig. 8 which will be described later. The real part and the imaginary part of the input data are multiplied in a predetermined manner by the complex multiplier 21, which produces a real part and an imaginary part in the results of such multiplications.

The results of the multiplications are supplied to the next stage (orthogonal modulator 4 in Fig. 6A) while being supplied also to the memory 22 so as to be stored therein. The results of the multiplications thus stored in the memory 22 are used to perform differential modulation of the next input. The operation for such differential modulation can be expressed as Eq. (1).

$$Z(t) = Z(t-1) \times Y(t) \qquad \text{Eq. (1)}$$

In Eq. (1), Y(t) stands for the complex input at time t; Z(t) for the result of the complex multiplication; and Z(t-1) for the result of the complex multiplication which is obtained at time (t-1) as the output data from the memory 22.

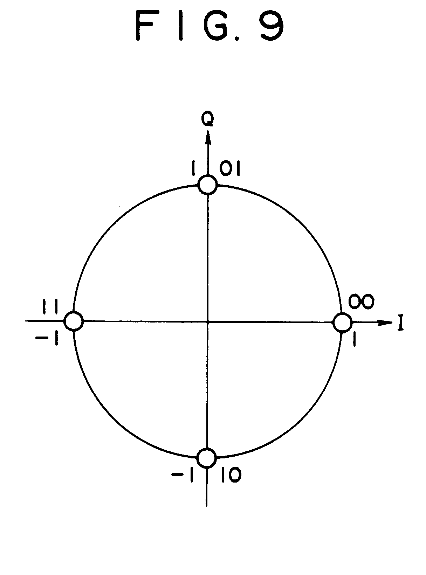

Fig. 9 shows an arrangement of signal points representing mutual correspondence between input bits and Y(t). More specifically, differential modulation is so executed that when the input bits are 00, Z(t) is turned to a signal point obtained with a rotation of 0° from Z(t-1); when the input bits are 01, Z(t) is turned to a signal point obtained with a rotation of 90° from Z(t-1); when the input bits are 10, Z(t) is turned to a signal point with a rotation of 270° from Z(t-1); and when the input bits are 11, Z(t) is turned to a signal point with a rotation of 180° from Z(t-1).

The two outputs of the differential modulator 3 are I information and Q information respectively, which are supplied to the orthogonal modulator 4. Fig. 8 shows an exemplary arrangement of signal points obtained by QPSK. In the orthogonal modulator 4, the I information and the Q information outputted from the differential modulator 3 are multiplied by COS waves and SIN waves respectively, and the results of such calculations are added to each other so that orthogonal modulation is executed to produce orthogonal modulated waves. These modulated waves are supplied to the frequency converter 5 in the next stage. In the frequency converter 5, the orthogonal modulated waves inputted thereto are processed in such a manner as to be converted into actual transmission frequencies. Thereafter any signal components of unrequired frequencies are removed through the band limit filter 6, and then radio waves representing the information are transmitted via the antenna 7.

In the receiving apparatus of Fig. 6B, its operation is performed exactly in the reverse procedure to that in the transmitting apparatus mentioned above. More specifically, any components of unrequired frequencies in the signals corresponding to the radio waves received by the antenna 11 are removed through the band limit filter 12, and the desired signal is supplied to the frequency converter 13. Subsequently the signal supplied to the frequency converter 13 is converted into a lower-frequency signal, which is further processed through the low pass filter 14 to become an IF signal.

Thereafter in the orthogonal demodulator 15, the signal supplied from the low pass filter 14 is multiplied by COS waves and SIN waves of the same frequencies as those on the transmission side, whereby I information and Q information are obtained. Subsequently in the differential demodulator 16, a calculation reverse to Eq. (1) is executed as given by Eq. (2) below, so that differential demodulated data is obtained.

$$Y(t) = Z(t)/Z(t-1) \qquad \text{Eq. (2)}$$

Since Eq. (2) includes a division of complex number, actually a calculation of Eq. (3) is necessary.

$$Y(t) = Z(t) \times \text{CMP}(Z(t-1))/|Z(t-1)|^2 \qquad \text{Eq. (3)}$$

Here, CMP(X) denotes a conjugate of a complex number X. That is, if

$$X = R + jI \qquad \text{Eq. (4)}$$

then,

$$\text{CMP}(X) = R - jI \qquad \text{Eq. (5)}$$

In Eq. (6), |X| denotes the value of the complex number X.

$$|X|^2 = R^2 + I^2 \qquad \text{Eq. (6)}$$

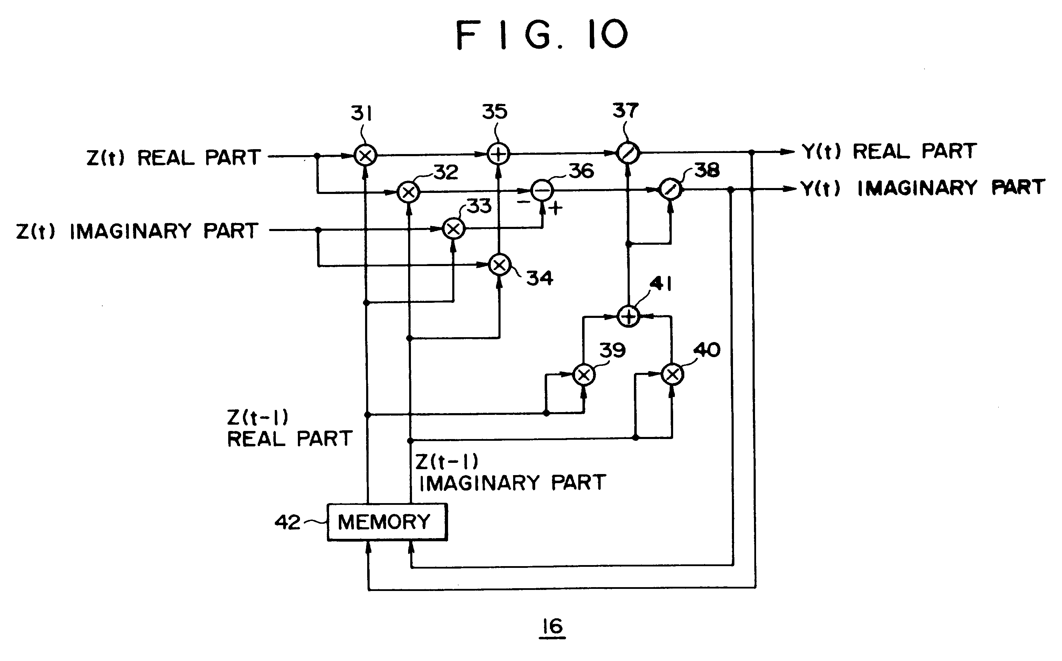

Fig. 10 shows an exemplary structure of the differential demodulator 16 which executes the above calculations. For the convenience of explanation, if

$$Z(t) = a + jb \qquad \text{Eq. (7)}$$

and

$$Z(t-1) = c + jd \qquad \text{Eq. (8)}$$

then,

$$CMP(Z(t-1)) = c - jd \qquad \text{Eq. (9)}$$

and

$$|Z(t-1)|^2 = c \times c + d \times d \qquad \text{Eq. (10)}$$

Therefore, the calculation of Eq. (3) may be rewritten as Eq. (11) given below.

$$Y(t) = (a+jb) \times (c-jd)/(cxc + dxd)$$

$$= ((ac+bd) + j(bc-ad))/(cxc + dxd)$$

$$= (ac+bd)/(cxc + dxd)$$

$$+ j(bc-ad)/(cxc + dxd) \qquad \dots \text{Eq.(11)}$$

In Fig. 10, a real number multiplier 31 multiplies the real part (a) of the input data (Z(t)) at time t by the real part (c) of the data (Z(t-1)) at time (t-1) supplied from an undermentioned memory 42, and then outputs the result (a x c). A real number multiplier 32 multiplies the real part (a) of the input data (Z(t)) by the imaginary part (d) of the data (Z(t-1)) supplied from the memory 42, and then outputs the result (a x d). A real number multiplier 33 multiplies the imaginary part (b) of the input data (Z(t)) by the real part (c) of the data (Z(t-1)) supplied from the memory 42, and then outputs the result (b x c). And a real number multiplier 34 multiplies the imaginary part (b) of the input data (Z(t)) by the imaginary part (d) of the data (Z(t-1)) supplied from the memory 42, and then outputs the result (b x d).

An adder 35 adds the multiplication result (a x c) of the real number multiplier 31 to the multiplication result (b x d) of the real number multiplier 34 and delivers an output. Meanwhile a subtracter 36 subtracts the multiplication result (a x d) of the real number multiplier 32 from the multiplication result (b x c) of the real number multiplier 33 and delivers an output.

A real number multiplier 39 multiplies the real parts, mutually, of the data (Z(t-1)) supplied from the memory 42 and outputs the result (c x c). A real number multiplier 40 multiplies the imaginary parts, mutually, of the data (Z(t-1)) supplied from the memory 42 and outputs the result (d x d). An adder 41 adds the multiplication result (c x c) of the real number multiplier 39 to the multiplication result (d x d) of the real number multiplier 40 and outputs the result of such addition.

A real number divider 37 divides the addition result (a x c + b x d) of the adder 35 by the addition result (c x c + d x d) of the adder 41 to thereby output a real part of the calculation result Y(t), and then supplies the same to the parallel-series converter 17 in the next stage and also to the memory 42. Meanwhile a real number divider 38 divides the subtraction result (a x d - b x c) of the subtracter 36 by the addition result (c x c + d x d) of the adder 41 to thereby output an imaginary part of the calculation result Y(t), and then supplies the same to the parallel-series converter 17 in the next stage and also to the memory 42.

The memory 42 stores therein the real part of the data (Y(t)) supplied from the real number divider 37 and the imaginary part of the data (Y(t)) supplied from the real number divider 38, and outputs the same therefrom at a predetermined timing.

In the manner described above, the numerator of the first term in Eq. (11) is calculated in the adder 35, and the numerator of the second term in Eq. (11) is calculated in the subtracter 36. Meanwhile, calculations of c x c and d x d are executed respectively in the real number multipliers 39 and 40, and the denominator of Eq. (11) is calculated in the adder 41. The first term and the second term in Eq. (11) are calculated respectively in the real number dividers 37 and 38, whereby Y(t) is obtained as a result of such calculations.

The output data from the differential demodulator 16 are supplied to the parallel-series converter 17. In this converter 17, the digital data of two paths are converted into digital data of one path by a procedure reverse to that in the series-parallel converter 2, and the converted data are supplied to the Viterbi decoder 18. Subsequently in the Viterbi decoder 18, error correction is executed in accordance with the Viterbi algorithm so that decoded data are obtained.

When the device shown in Fig. 10 is employed for executing the calculation of Eq. (11), it is necessary for the device to comprise six real number multipliers, two adders, one subtracter and two real number dividers, in which the real number multipliers and the real number dividers are particularly large in circuit scale to consequently bring about some difficulties in realizing a desired configuration.

Further, if Eq. (2) is used to perform differential demodulation, the characteristic is extremely deteriorated due to variations in the transmission line characteristics. For example, the level of a signal delivered to the transmission line is continuously varied by phasing and some other harmful influences. And there may arise another problem that thermal noise is added to consequently cause a positional deviation of the signal point. Particularly in the following case, it is supposed that the result of differential demodulation is remarkably deteriorated.

That is, when the signal level of Z(t-1) is lowered due to harmful influence of phasing or the like, the division in the differential demodulation based on Eq. (2) is executed by a smaller value to eventually increase the harmful influence derived from the noise included in Z(t).

It is therefore an object of the present invention to attain improvements in a method of differential demodulation by enhancing the error rate characteristic with sufficient consideration given to error correction in a succeeding stage and further by reducing the scale of the circuit configuration.

According to one aspect of the present invention, there is provided a receiving apparatus adapted to receive an input signal formed through differential modulation and orthogonal modulation of a sequence of information to be transmitted and further through frequency conversion thereof into a transmission frequency. This apparatus comprises a frequency converter for converting the frequency of the received signal into a lower frequency, an orthogonal demodulator for executing orthogonal demodulation of the signal outputted from the frequency converter, and a differential demodulator for executing differential demodulation of the signal outputted from the orthogonal demodulator, wherein the differential demodulator outputs a signal weighted in accordance with the transmission line characteristic.

And according to another aspect of the present invention, there is provided a receiving method adapted to receive an input signal formed through differential modulation and orthogonal modulation of a sequence of information to be transmitted and further through frequency conversion thereof into a transmission frequency. This method comprises the steps of converting the frequency of the received signal into a lower frequency, then executing orthogonal demodulation of the frequency-converted signal, and weighting the orthogonal-demodulated signal in accordance with the transmission line characteristic and executing differential demodulation of the weighted signal.

In the present invention where the result of differential demodulation is weighted in accordance with the transmission line characteristic, it becomes possible to minimize the influence of the data, which have been affected harmfully by phasing or noise to a lower signal level, on the calculation of the likelihood in Viterbi decoding performed in the succeeding stage, hence enhancing the error correction capability. Further, a divider and so forth required heretofore in the differential demodulator can be omitted to consequently achieve an advantage of reducing the circuit scale.

The invention will be further described by way of example, with reference to the accompanying drawings, in which:-

Figs. 1A and 1B are block diagrams of a transmitting apparatus and a receiving apparatus, respectively, in an information transmission system representing an embodiment of the present invention;

Fig. 2 is a block diagram showing an exemplary configuration of a differential demodulator 50 in Fig. 1B;

Figs. 3A and 3B are block diagrams of a transmitting apparatus and a receiving apparatus, respectively, in an information transmission system representing another embodiment of the present invention;

Fig. 4 shows an arrangement of signal points corresponding to input data Y(t) in 8PSK;

Fig. 5 shows an example of Z(t) in 8PSK;

Figs. 6A and 6B are block diagrams of a transmitting apparatus and a receiving apparatus, respectively, in an information transmission system according to the related art;

Fig. 7 is a block diagram showing an exemplary configuration of a differential modulator 3 in Fig. 6A;

Fig. 8 shows an example of Z(t) in QPSK;

Fig. 9 shows an arrangement of signal points corresponding to input data Y(t) in QPSK; and

Fig. 10 is a block diagram showing an exemplary configuration of a differential demodulator 16 in Fig. 6B.

Hereinafter some preferred embodiments of the present invention will be described with reference to the accompanying drawings.

First, a description will be given with regard to an exemplary case of performing differential demodulation by the use of Eq. (12) instead of Eq. (2) mentioned already.

$$Y(t) = Z(t) . CMP(Z(t-1)) \qquad\qquad \text{Eq. (12)}$$

In the above equation, Z(t) denotes differential coded data inputted presently, and CMP(Z(t-1)) denotes a conjugate complex number of the differential coded data (Z(t-1)) inputted previously by a predetermined period of time. Further, Y(t) denotes the data differential demodulated according to the above calculation.

If Z(t) = a+jb and Z(t-1) = c+jd, then CMP(Z(t-1)) = c-jd. Therefore, Eq. (13) can be obtained by developing Eq. (12) in the following manner.

$$Y(t) = (a + jb) \cdot (c - jd)$$

$$= (ac + bd) + j(bc - ad) \qquad\qquad ... \text{Eq.(13)}$$

Owing to the use of Eq. (13), a required circuit configuration can be composed of four multipliers, one adder and one subtracter to consequently reduce the circuit scale approximately to a half in comparison with that of the known differential demodulator 16 shown in Fig. 10.

Eq. (13) is equivalent to a product of multiplying Eq. (11) by Eq. (14).

$$c \cdot c + d \cdot d \qquad\qquad \text{Eq. (14)}$$

Eq. (14) represents the amplitude of the received signal, and multiplication of this amplitude signifies multiplication of the square of the transmission line characteristic, so that it corresponds to weighting of the result of the differential demodulation according to the transmission line characteristic.

More specifically, when the signal level is low (i.e., when the calculation result of Eq. (14) has a small value) and the reliability of the received signal point is low, the result of the differential demodulation is also rendered small in accordance therewith, so that the data are processed as those of lower reliability in the likelihood calculation in Viterbi decoding executed in the succeeding stage, thereby reducing the influence exerted on the error correction. To the contrary, when the signal level is high (i.e., when the calculation result of Eq. (14) has a great value) and the reliability of the received signal point is high, the result of the differential demodulation comes to have a stable value, so that the data are processed as those of higher reliability in the likelihood calculation in Viterbi decoding executed in the succeeding stage, thereby increasing the influence exerted on the error correction. Consequently, it becomes possible to enhance the capability of error correction.

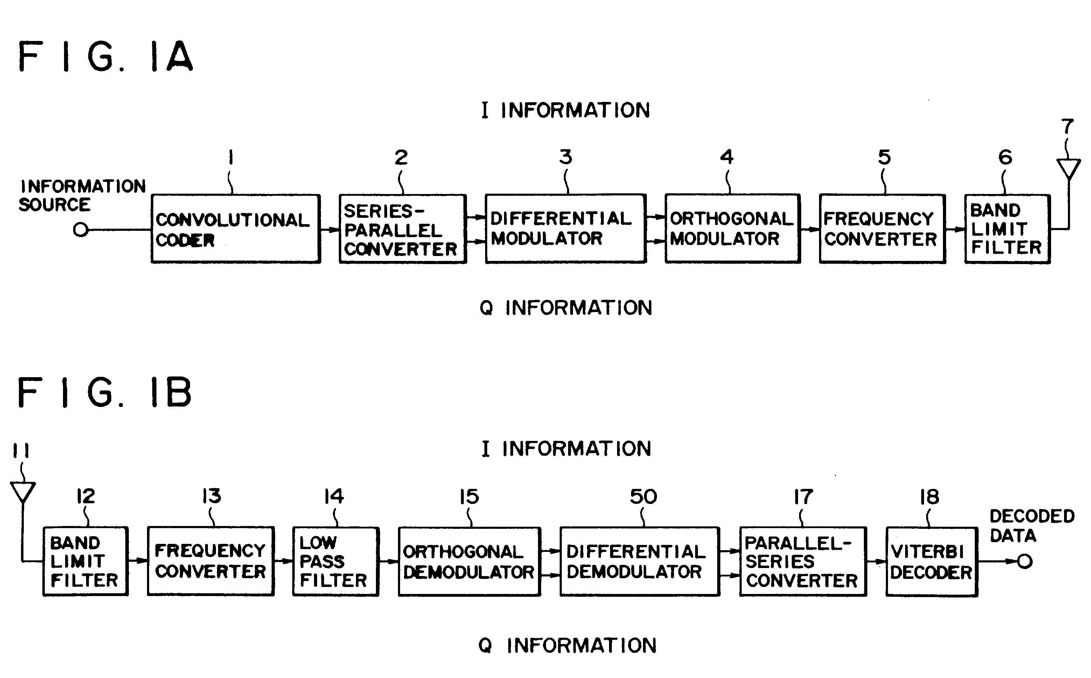

Now an explanation will be given first on an exemplary case of transmission based on QPSK (Quadrature Phase Shift Keying). Figs. 1A and 1B are block diagrams of a transmitting apparatus and a receiving apparatus, respectively, in an information transmission system representing an embodiment of the present invention. This transmitting apparatus may be formed fundamentally into the same configuration as that of the aforesaid apparatus shown in Fig. 6A. Meanwhile in the receiving apparatus of Fig. 1B, an undermentioned differential demodulator 50 (differential demodulating means) is formed differently in configuration from the aforesaid differential demodulator 16 included in the receiving apparatus of Fig. 6B. The other configuration and operation are fundamentally the same as those described with reference to Figs. 6B, and here the operation thereof will be briefly described below.

In the transmitting apparatus of Fig. 1A, digital data inputted to a convolutional coder 1 from a predetermined information source are processed through error correction coding to become error-protected data, which are then supplied to a series-parallel converter 2. The data thus obtained are digital data of one path. Such digital data of one path supplied to the series-parallel converter 2 are converted into digital data of two paths. The result of such conversion is supplied to a differential modulator 3 (differential coding means). The differential modulator 3 executes differential coding of internal information and the input information (digital data of two paths supplied from the series-parallel converter 2).

The two outputs of the differential modulator 3 respectively become I (In-phase) information and Q (Quadrature-phase) information, which are then supplied to an orthogonal modulator 4 (modulating means). In the orthogonal modulator 4, the I information outputted from the differential modulator 3 is multiplied by COS waves while the Q information outputted also therefrom is multiplied by SIN waves respectively, and the results of such calculations are added to each other through orthogonal modulation to consequently become orthogonal modulated waves. Subsequently the orthogonal modulated waves are supplied to a frequency converter 5 in the next stage. In the frequency converter 5, the orthogonal modulated waves inputted thereto are frequency-modulated in such a manner as to have an actual transmission frequency. Then the output of the frequency converter 5 is supplied to a band limit filter 6, which removes some signal components of unrequired frequencies, and the signal after such removal of the components is transmitted by radio waves from an antenna 7.

In the receiving apparatus of Fig. 1B, its operation is performed exactly in the reverse procedure to that in the transmitting apparatus mentioned above. More specifically, any components of unrequired frequencies in the signals corresponding to the radio waves received by an antenna 11 are removed through a band limit filter 12, and the desired signal is supplied to a frequency converter 13. Subsequently the signal supplied to the frequency converter 13 is converted into a lower-frequency signal, which is further processed through a low pass filter 14. This filter 14 permits passage therethrough of only the partial input signal of any frequency lower than a predetermined frequency and then outputs an IF (Intermediate Frequency) signal.

Thereafter in an orthogonal demodulator 15 (demodulating means), the signal supplied from the low pass filter 14 is multiplied by COS waves and SIN waves of the same frequencies as those on the transmission side, whereby I information and Q information are obtained. In the differential demodulator 50, a predetermined calculation is executed as will be described later, so that differential demodulated data are obtained. The output data from the differential demodulator 50 are supplied to a parallel-series converter 17, which then processes the digital data of two paths inversely to the process executed in the series-parallel converter 2, thereby converting the input data into digital data of one path. Subsequently the digital data thus obtained are supplied to a Viterbi decoder 18 (error correcting/decoding means), which executes error correction of the input signal in accordance with a Viterbi algorithm and then outputs decoded data.

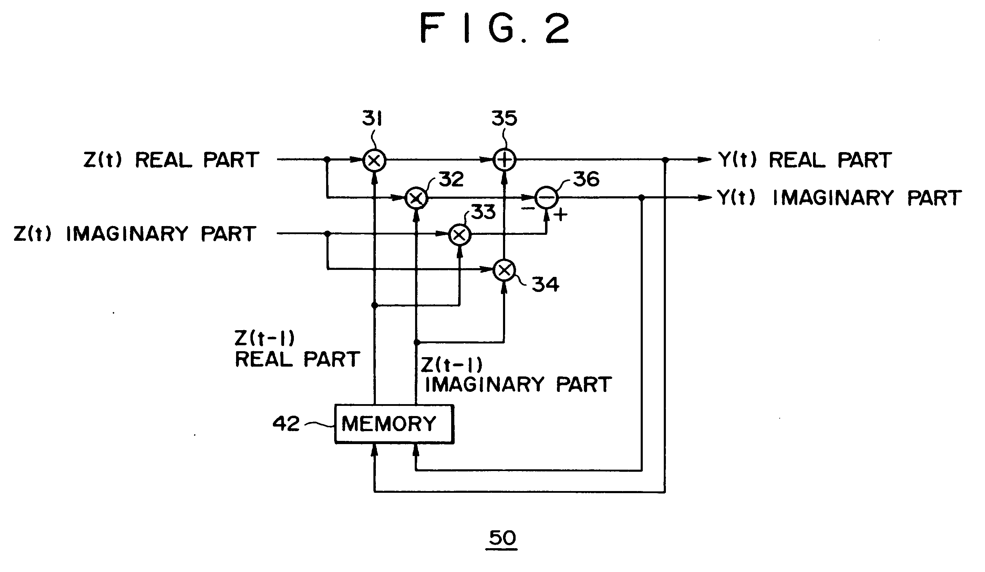

Fig. 2 is a block diagram showing a detailed configuration of the differential demodulator 50 included in Fig. 1B. The I information and the Q information supplied from the orthogonal demodulator 15 in Fig. 1B are inputted as a real part and an imaginary part, respectively, of Z(t) to the differential demodulator 50.

The differential demodulator 50 shown in Fig. 2 is structurally different from the aforementioned differential demodulator 16 of Fig. 10 in the point that the real number dividers 37, 38, the real number multipliers 39, 40 and the adder 41 are eliminated.

More specifically, a real number multiplier 31 multiplies the real part (a) of the input data (Z(t)) at time t by the real part (c) of the data (Z(t-1)) at time (t-1) supplied from an undermentioned memory 42, and then outputs the result (a x c). A real number multiplier 32 multiplies the real part (a) of the input data (Z(t)) by the imaginary part (d) of the data (Z(t-1)) supplied from the memory 42, and then outputs the result (a x d). A real number multiplier 33 multiplies the imaginary part (b) of the input data (Z(t)) by the real part (c) of the data (Z(t-1)) supplied from the memory 42, and then outputs the result (b x c). And a real number multiplier 34 multiplies the imaginary part (b) of the input data (Z(t)) by the imaginary part (d) of the data (Z(t-1)) supplied from the memory 42, and then outputs the result (b x d).

An adder 35 adds the multiplication result (a x c) of the real number multiplier 31 to the multiplication result (b x d) of the real number multiplier 34 and delivers an output while supplying the same to the memory 42 also. Meanwhile a subtracter 36 subtracts the multiplication result (a x d) of the real number multiplier 32 from the multiplication result (b x c) of the real number multiplier 33 and delivers an output while supplying the same to the memory 42 also.

The memory 42 stores therein the real part of the data (Y(t)) supplied from the adder 35 and the imaginary part of the data (Y(t)) supplied from the subtracter 36, and outputs the same therefrom at a predetermined timing.

For the convenience of explanation, the following conditions are assumed here as in the aforementioned case of Fig. 10.

$$Z(t) = a + jb \qquad\qquad \text{Eq. (7)}$$

and

$$Z(t-1) = c + jd \qquad\qquad \text{Eq. (8)}$$

Then ac, ad, bc and bd are calculated by the real number multipliers 31 to 34 respectively. Thereafter the first term of Eq. (13) is calculated by the adder 35, and the second term of Eq. (13) is calculated by the subtracter 36, so that Y (t) is obtained as a result of such calculations.

The output of the differential demodulator 50 shown in Fig. 2 is supplied to a parallel-series converter 17 included in Fig. 1B. In this converter 17, the digital data of two paths are converted into digital data of one path by a procedure reverse to that in the series-parallel converter 2, and the converted data are supplied to the Viterbi decoder 18. Subsequently in the Viterbi decoder 18, error correction is executed in accordance with the Viterbi algorithm so that decoded data are obtained.

Due to the calculation of Eq. (13) thus executed, it becomes possible to reduce the circuit scale approximately to a half in comparison with the aforementioned differential demodulator 16 of Fig. 10.

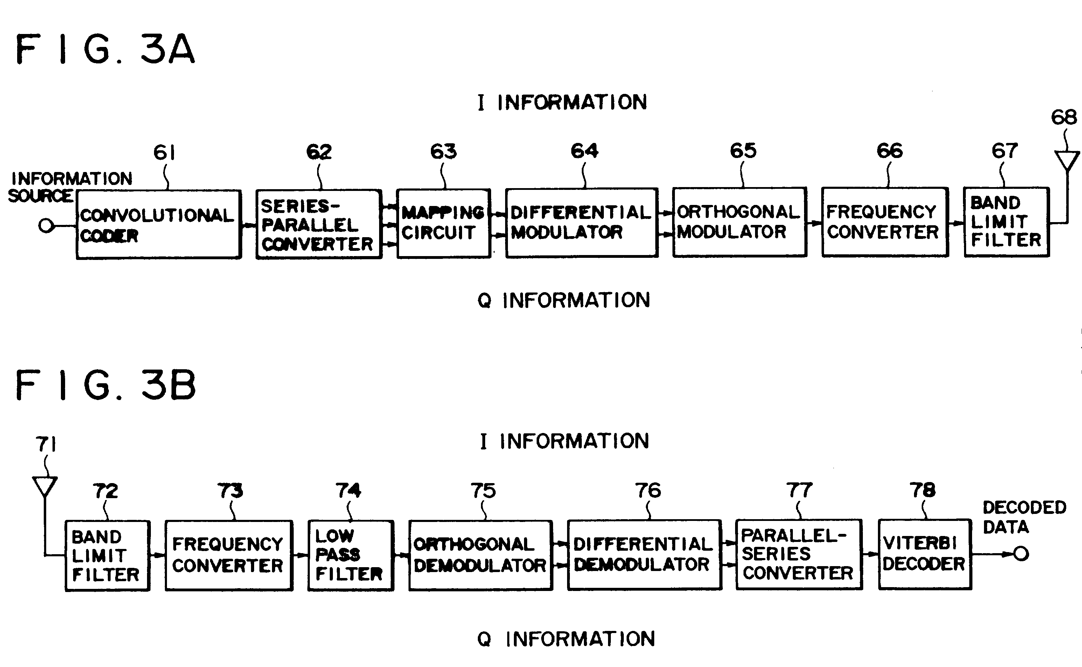

Next an explanation will be given with regard to an exemplary case of transmission based on 8PSK. Figs. 3A and 3B are block diagrams of a transmitting apparatus and a receiving apparatus, respectively, in an information transmission system representing another embodiment of the present invention where 8PSK is employed.

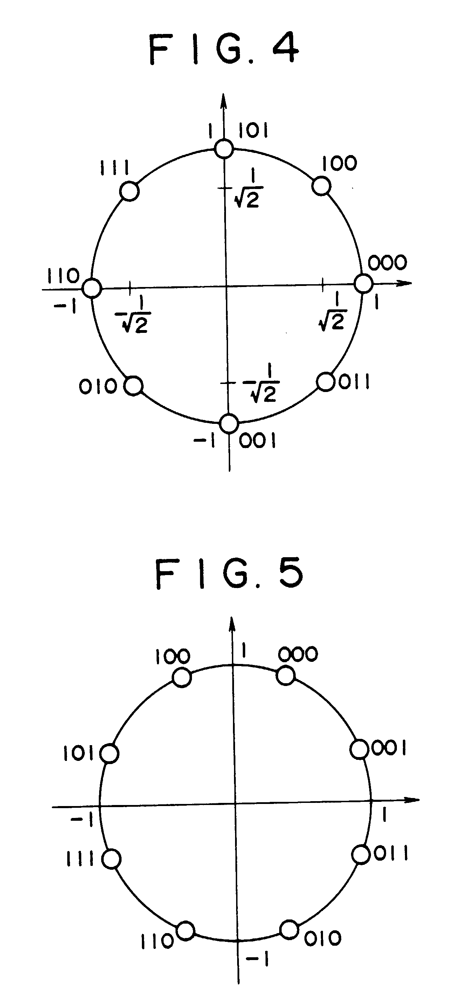

In the transmitting apparatus of Fig. 3A, a convolutional coder 61 executes error correction coding of input digital data and then delivers output data. A series-parallel converter 62 converts the input digital data of one path into digital data of three paths and outputs the result of such conversion. A mapping circuit 63 allocates signal points to the input data in accordance with the correspondence between the input data and an undermentioned arrangement of signal points shown in Fig. 4. Each of the signal points thus allocated is expressed by a complex number, and its real part and imaginary part are outputted from the mapping circuit 63.

A differential modulator 64 (differential coding means) is fundamentally the same in structure as the aforementioned one shown in Fig. 7, and executes calculations to produce I information and Q information out of the present input data and the preceding input data. An orthogonal modulator 65 (modulating means) multiplies the input I information and Q information by COS waves and SIN waves respectively and then adds the results thereof to each other to produce an output. Subsequently a frequency converter 66 converts the frequency of the input signal into an actual transmission frequency. A band limit filter 67 removes some signal components included in the input signal and corresponding to unrequired frequencies. And the output signal of the band limit filter 67 is transmitted by radio waves from an antenna 68.

In the receiving apparatus of Fig. 3B, a band limit filter 72 removes some components of unrequired frequencies included in the input radio-wave signal received via an antenna 71. A frequency converter 73 converts the input signal frequency into a predetermined frequency which is lower than that of the received signal. A low-pass filter 74 permits passage therethrough of only the partial input signal of any frequency lower than the predetermined frequency and then outputs an IF signal.

An orthogonal demodulator 75 (demodulating means) multiplies the input signal by the COS waves and the SIN waves of the same frequencies as those on the transmission side to thereby to produce I information and Q information. A differential demodulator 76 (differential demodulating means) processes the input signal by the method according to Eq. (13) to perform differential demodulation thereof. And subsequently a real part and an imaginary part of the complex number obtained as a result of such differential demodulation are outputted from the demodulator 76. A parallel-series converter 77 converts the input digital data of two paths into digital data of one path and then outputs the same. A Viterbi decoder 78 executes error correction of the input digital data in accordance with a Viterbi algorithm and then outputs decoded data.

Now the operation performed in the above system will be described below. The digital data inputted to the convolutional coder 61 are processed through error correction coding to become error-protected data, which are then supplied to the series-parallel converter 62. The digital data of one path thus inputted are converted into digital data of three paths in the series-parallel converter 62, and the result of such conversion is supplied to the mapping circuit 63. Subsequently in this circuit 63, signal points are allocated to the input data in accordance with the correspondence between the input data and the arrangement of signal points, as shown in Fig. 4 for example.

In Fig. 4, input data 100 for example is allocated to a point of 45° . The signal point thus allocated can be represented by a complex number. And when the input data is "100" , it is expressed as 1/SQRT(2) + j1/SQRT(2), and its real part (1/SQRT(2)) and imaginary part (1/SQRT(2)) are supplied to the differential modulator 64.

In the differential modulator 64, differential coding is executed by using the internal information and the input information. The structure of the differential modulator 64 can be realized with a circuit configuration similar to that shown in Fig. 7 for example. In this case, complex coordinates of the signal point corresponding to the input data "000" shown in Fig. 5 are set as initial values to be stored in the memory 22. The outputs of the differential modulator 64 become I information and Q information respectively, which are then supplied to the orthogonal modulator 65.

Fig. 5 shows an exemplary arrangement of signal points obtained in 8PSK. In the orthogonal modulator 65, the I information and the Q information are multiplied by COS waves and SIN waves respectively, and the results of such calculations are added to each other through orthogonal modulation to consequently become orthogonal modulated waves, which are then supplied to the frequency converter 66 in the next stage.

In the frequency converter 66, the signal supplied from the orthogonal converter 65 is processed through frequency conversion in a manner to have an actual transmission frequency and then is supplied to the band limit filter 67. In this filter 67, some signal components of unrequired frequencies included in the input signal are removed therefrom, and the remaining signal is transmitted by radio waves from the antenna 68.

In the receiving apparatus of Fig. 3B, its operation is performed exactly in the reverse procedure to that in the transmitting apparatus mentioned above. More specifically, any components of unrequired frequencies in the input signal corresponding to the radio waves received by the antenna 71 are removed through the band limit filter 72, and the desired signal is supplied to the frequency converter 73. Subsequently the signal inputted to the frequency converter 73 is converted into a lower-frequency signal, which is further processed through the low pass filter 74. This filter 74 permits passage therethrough of only the partial input signal of any frequency lower than a predetermined frequency and then outputs an IF signal. The IF signal thus obtained is supplied to the orthogonal demodulator 75.

Thereafter in the orthogonal demodulator 75, the signal supplied from the low pass filter 74 is multiplied by COS waves and SIN waves of the same frequencies as those on the transmission side, whereby I information and Q information are obtained. Subsequently such I information and Q information are supplied to the differential demodulator 76.

In the differential demodulator 76, the signal supplied thereto is processed through differential demodulation according to the method expressed by Eq. (12). The structure of the differential demodulator 76 can be realized with a circuit configuration similar to that shown in Fig. 2. In this example, the calculation of Eq. (13) is executed.

The result of such differential demodulation in the differential demodulator 76 is obtained in the form of a complex number, and its real part and imaginary part are outputted therefrom. The real part and the imaginary part of the differential demodulation result (complex number) outputted from the differential demodulator 76 are supplied to the parallel-series converter 77.

In the parallel-series converter 77, the digital data of two paths (composed of the real part and the imaginary part) supplied from the differential demodulator 76 are converted into digital data of one path, which are then supplied to the Viterbi decoder 78. Subsequently in the Viterbi decoder 78, error correction of the digital data is executed in accordance with a Viterbi algorithm, whereby decoded data are obtained. In the 8PSK mentioned, the data are decoded on the basis of a multi-valued scale relative to the inter-signal Euclidean distance, so that it may be regarded as soft-decision Viterbi decoding.

Owing to the process of differential demodulation executed according to Eq. (13) as described above, the circuit scale can be reduced approximately to a half in comparison with the known one. And the data can be weighted in accordance with the transmission line characteristic through multiplication of the data by the coefficient (c x c + d x d) defined in Eq. (14), hence compensating the deterioration of the transmission line characteristic caused by phasing, noise or the like.

Regarding any of the embodiments mentioned, the explanation has been given on an exemplary case of adopting a modulation method of QPSK or 8PSK. However, the present invention is not limited to such examples alone.

Further, the above embodiments represent mere examples where radio waves are used for transmission and reception of information. In addition, the present invention is applicable also to some other cases of performing transmission and reception of information via any of other transmission media as well.

In the present invention where the result of differential demodulation is weighted in accordance with the transmission line characteristic, it becomes possible to minimize the influence of the data, which have been affected harmfully by phasing or noise to a lower signal level, on the calculation of the likelihood in Viterbi decoding performed in the succeeding stage, hence enhancing the capability of error correction. Furthermore, the provision of a divider and so forth required heretofore in the differential demodulator can be omitted to consequently achieve an advantage of reducing the circuit scale.

Thus, although the invention has been described with reference to some preferred embodiments thereof, it is to be understood that the invention is not restricted solely to the above embodiments, and a variety of other changes and modifications will be apparent to those skilled in the art without departing from the scope of the invention as determined by the appended claims.

**Claims**

1. An apparatus for receiving an input signal formed through differential modulation and orthogonal modulation of a sequence of information to be transmitted and further through frequency conversion thereof into a transmission frequency, said apparatus comprising:

   a frequency converter means (13,73) for converting the frequency of the received signal into a lower frequency;

   an orthogonal demodulator means (15,75) for executing orthogonal demodulation of the signal outputted from said frequency converter means (13,73); and

   a differential demodulator means (50,76) for executing differential demodulation of the signal outputted from said orthogonal demodulator means (15,75);

   wherein said differential demodulator means (50,76) outputs a signal weighted in accordance with the transmission line characteristic.

2. The apparatus according to claim 1, wherein said sequence of information is processed through the differential modulation after a process of convolutional coding;
   said apparatus further comprising a Viterbi decoder means (18,78) for Viterbi-decoding the signal outputted from said differential demodulator means (50,76), wherein said differential demodulator means (50,76) outputs the signal to said Viterbi decoder means (18,78) in such a manner as to increase or decrease, depending on whether the signal amplitude is large or small, the influence exerted on the calculation of the likelihood in said Viterbi decoder means (18,78).

3. The apparatus according to claim 1 or 2, wherein said sequence of information is processed through phase shift keying (PSK) modulation.

4. The apparatus according to claim 1, 2 or 3, wherein the signal outputted from said orthogonal demodulator means (15,75) is composed of a real part and an imaginary part.

5. The apparatus according to claim 4, wherein said differential demodulator means (50) comprises a memory means (42) for storing the real part and the imaginary part of the signal inputted thereto previously in time from said orthogonal demodulator means (15);

   a first multiplier means (31) for multiplying the real part of the signal inputted from said orthogonal demodulator (15) by the real part read out from said memory means (42);

   a second multiplier means (32) for multiplying the real part of the signal inputted from said orthogonal demodulator means (15) by the imaginary part read out from said memory means (42);

   a third multiplier means (33) for multiplying the imaginary part of the signal inputted from said orthogonal demodulator means (15) by the real part read out from said memory means (42);

   a fourth multiplier means (34) for multiplying the imaginary part of the signal inputted from said orthogonal demodulator means (15) by the imaginary part read out from said memory means (42);

   an adder means (35) for adding the output of said first multiplier means (31) and the output of said fourth multiplier means (34) to each other;

   and a subtracter means (36) for delivering the difference between the output of said second multiplier means (32) and the output of said third multiplier means (33).

6. A method of receiving an input signal formed through differential modulation and orthogonal modulation of a sequence of information to be transmitted and further through frequency conversion thereof into a transmission frequency, said method comprising the steps of:

   converting the frequency of the received signal into a lower frequency;

executing orthogonal demodulation of the frequency-converted signal; and

weighting the orthogonal-demodulated signal in accordance with the transmission line characteristic and executing differential demodulation of the weighted signal.

7. The method according to claim 6, wherein said sequence of information is transmitted after being processed through convolutional coding and subsequent differential modulation;
said method further comprising the step of Viterbi-decoding the differential-demodulated signal, wherein said weighting is performed in such a manner as to increase or decrease, depending on whether the signal amplitude is large or small, the influence exerted on the calculation of the likelihood in said Viterbi decoding.

8. The method according to claim 6 or 7, wherein said sequence of information is processed through phase shift keying (PSK) modulation.

# F I G. IA

I INFORMATION

INFORMATION SOURCE → CONVOLUTIONAL CODER (1) → SERIES-PARALLEL CONVERTER (2) → DIFFERENTIAL MODULATOR (3) → ORTHOGONAL MODULATOR (4) → FREQUENCY CONVERTER (5) → BAND LIMIT FILTER (6) → (7)

Q INFORMATION

# F I G. IB

I INFORMATION

(11) → BAND LIMIT FILTER (12) → FREQUENCY CONVERTER (13) → LOW PASS FILTER (14) → ORTHOGONAL DEMODULATOR (15) → DIFFERENTIAL DEMODULATOR (50) → PARALLEL-SERIES CONVERTER (17) → VITERBI DECODER (18) → DECODED DATA

Q INFORMATION

EP 0 793 371 A1

# F I G. 2

50

EP 0 793 371 A1

# F I G. 3A

I INFORMATION

INFORMATION SOURCE

| 61 | 62 | 63 | 64 | 65 | 66 | 67 | 68 |
|---|---|---|---|---|---|---|---|
| CONVOLUTIONAL CODER | SERIES-PARALLEL CONVERTER | MAPPING CIRCUIT | DIFFERENTIAL MODULATOR | ORTHOGONAL MODULATOR | FREQUENCY CONVERTER | BAND LIMIT FILTER | |

Q INFORMATION

# F I G. 3B

I INFORMATION

| 71 | 72 | 73 | 74 | 75 | 76 | 77 | 78 |
|---|---|---|---|---|---|---|---|
| | BAND LIMIT FILTER | FREQUENCY CONVERTER | LOW PASS FILTER | ORTHOGONAL DEMODULATOR | DIFFERENTIAL DEMODULATOR | PARALLEL-SERIES CONVERTER | VITERBI DECODER |

DECODED DATA

Q INFORMATION

EP 0 793 371 A1

# F I G. 4

# F I G. 5

F I G. 6A

INFORMATION SOURCE — CONVOLUTIONAL CODER (1) — SERIES-PARALLEL CONVERTER (2) — DIFFERENTIAL MODULATOR (3) — ORTHOGONAL MODULATOR (4) — FREQUENCY CONVERTER (5) — BAND LIMIT FILTER (6) — (7)

I INFORMATION

Q INFORMATION

F I G. 6B

(11) — BAND LIMIT FILTER (12) — FREQUENCY CONVERTER (13) — LOW PASS FILTER (14) — ORTHOGONAL DEMODULATOR (15) — DIFFERENTIAL DEMODULATOR (16) — PARALLEL-SERIES CONVERTER (17) — VITERBI DECODER (18) — DECODED DATA

I INFORMATION

Q INFORMATION

17

# F I G. 7

# F I G. 8

# F I G. 9

# F I G. 10

Z(t) REAL PART

Z(t) IMAGINARY PART

Z(t-1) REAL PART

Z(t-1) IMAGINARY PART

Y(t) REAL PART

Y(t) IMAGINARY PART

31 32 33 34 35 36 37 38 39 40 41

42 MEMORY

16

**European Patent Office**

## EUROPEAN SEARCH REPORT

Application Number

EP 97 30 0862

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 446 763 A (BAUM KEVIN L  ET AL) 29 August 1995 | 1-4,6-8 | H04L27/233 H04L27/227 H03M13/12 |
| A | * abstract; figure 2 *  * column 3, line 68 *  * column 4, line 22 *  * column 5, line 16 - column 6, line 25; figures 6,7 * | 5 | |
| X | WO 95 26601 A (ERICSSON INC) 5 October 1995  * page 7, line 6 - page 9, line 2 *  * claim 21 *  * figure 1 * | 1-8 | |
| X | US 4 742 533 A (WEIDNER MICHAEL Y  ET AL) 3 May 1988  * abstract; figure 2 *  * column 4, line 41 - column 7, line 12 *  * column 7, line 59 - line 60 * | 1-4,6-8 | |
| A | EP 0 666 659 A (MITRE CORP) 9 August 1995  * column 11, line 18 - column 12, line 51; figure 4 * | 1-8 | TECHNICAL FIELDS SEARCHED      (Int.Cl.6) H04L H03M |

The present search report has been drawn up for all claims

| Place of search | Date of completion of the search | Examiner |
|---|---|---|
| MUNICH | 29 April 1997 | Farman, T |

FPO FORM 1503 03.82 (P04C01)